Europäisches Patentamt

(19) European Patent Office    (11) Publication number: **0 054 433**

Office européen des brevets    **B1**

(12)    **EUROPEAN PATENT SPECIFICATION**

(45) Date of publication of patent specification: **12.03.86**    (51) Int. Cl.⁴: **B 60 J 7/185,** B 60 J 7/04

(21) Application number: **81305879.9**

(22) Date of filing: **15.12.81**

(54) Latch for vehicle sliding roof assembly.

(30) Priority: **17.12.80 GB 8040466**

(43) Date of publication of application:
**23.06.82 Bulletin 82/25**

(45) Publication of the grant of the patent:
**12.03.86 Bulletin 86/11**

(84) Designated Contracting States:
**DE FR GB**

(56) References cited:
**EP-A-0 035 371**
**DE-A-2 731 408**
**DE-B-1 230 683**
**DE-B-1 281 871**
**GB-A-1 438 019**
**GB-A-2 024 114**
**GB-A-2 054 478**
**US-A-3 970 343**

(73) Proprietor: **Britax Weathershields Limited**
**180 Sherlock Street**
**Birmingham B5 7EH (GB)**

(72) Inventor: **Cunningham, Douglas James**
**Sambourne 4 Church Close Dunton Bassett**
**Lutterworth Leicestershire, LE16 5JY (GB)**
Inventor: **Bennett, Brian Stewart**
**58 Buckingham Rise**
**Allesley Park Coventry (GB)**

(74) Representative: **Hollinghurst, Antony**
**Britax Division (Patents) Kingsham Road**
**Chichester West Sussex PO19 2UG (GB)**

Courier Press, Leamington Spa, England.

**Description**

This invention relates to sliding sunroof assemblies for vehicles and more particularly to latches for such assemblies.

Patent Specification GB—A—2024114 discloses, according to the pre-characterising part of claim 1, a vehicle sliding roof assembly having an outer sliding panel and a separately movable inner sliding panel each of which is slidable between a closed position in which it closes an opening in a vehicle roof and an open position in which such opening is exposed. The outer panel is made of a transparent or translucent material, such as glass, while the panel (or canopy) serves as a sun blind. The present invention is concerned with the provision of a latch for a sliding roof assembly of this type which facilitates the opening of both panels simultaneously.

Hereinafter the edge of each sliding panel which travels across the opening in the vehicle roof as the panel is moved between its open and its closed position will be referred to as "the leading edge" and the opposite edge as "the trailing edge".

According to the invention, a latch for a vehicle sliding roof assembly of the type described above is characterised in that it comprises a rack having a series of latching formations spaced therealong and positioned to extend between the inner and outer panels in the direction of sliding movement thereof, a latching member mounted on the trailing edge of the outer panel and biased into a position in which it engages with the rack, and handle means at the leading edges of the panels, accessible from the side of the inner panel remote from the outer panel and operable in a first position to effect disengagement of the latching member from the rack and simultaneous sliding of both panels and operable in a second position to cause sliding movement of the inner panel while leaving the latching member engaged with the rack.

The handle means may comprise a first handle rigidly mounted on the outer panel and a second handle mounted on the inner panel for limited movement relative thereto in the direction of sliding movement of the panels, so that movement of the second handle towards the first handle causes disengagement of the latching member, the two handles being disposed in proximity to one another when the two panels are in mutual alignment so that both handles can be grasped with one hand to cause disengagement of the latching member and thus effect simultaneous sliding movement thereof.

The handle means may be coupled to the pawl by a rod having a projection arranged to be brought into abutment with the latching member to cause disengagement thereof. The rod may have a slide guide mounted on its trailing end for sliding engagement with the rack which is itself then provided with a similar slide guide on its leading end for sliding engagement with the rod. This arrangement provides an intermediate support for both the rod and the rack in the space between the two panels.

An embodiment of the invention will now be described, by way of example, with reference to the accompanying drawings, in which:

Figure 1 is a plan view of a sliding roof assembly in accordance with the invention,

Figure 2 is a cross-sectional view taken on the line 2—2 in Figure 1,

Figure 3 is a cross-sectional view taken on the line 3—3 of Figure 1,

Figure 4 is a cross-sectional view taken on the line 4—4 in Figure 1,

Figure 5 is a plan view from below on an enlarged scale, showing the pawl of the latch in its engaged position with both panels closed, with the inner panel removed, and

Figure 6 is a plan view from below of the handle assembly.

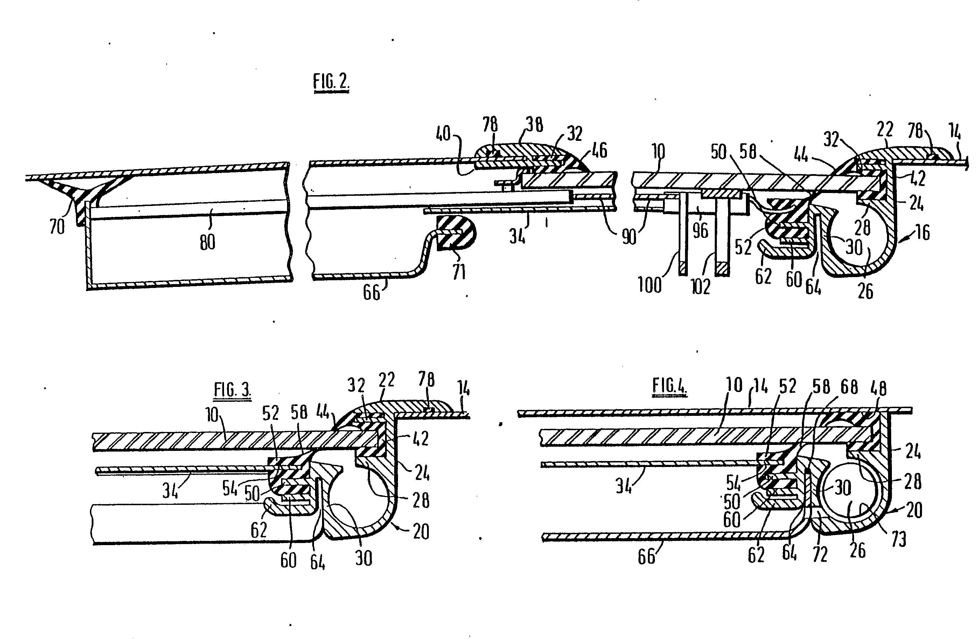

The drawings show a sliding roof assembly comprising a sliding glass panel 10 mounted in a frame 12 which is fitted into an opening in a vehicle roof 14. The front and side elements of the frame 12 are formed by the central element 16 and the side limbs 18 and 20 respectively of a U-shaped member of extruded aluminium. As can be seen from Figure 2, this extrusion is of T-shaped cross section, having one side of its cross bar 22 overlying the vehicle roof 14 and its stem 24 projecting downwardly adjacent to the edge of the opening. Integral with the stem 24 is a drain channel 26 of circular cross section having an opening defined by limbs 28 and 30. The limb 28, together with a web 32 disposed just below the level of the vehicle roof 14 defines a channel for receiving an edge of the panel 10 while the limb 30 supports a formation for engagement with a sliding sun blind 34 (Figure 2), as will be described hereinafter.

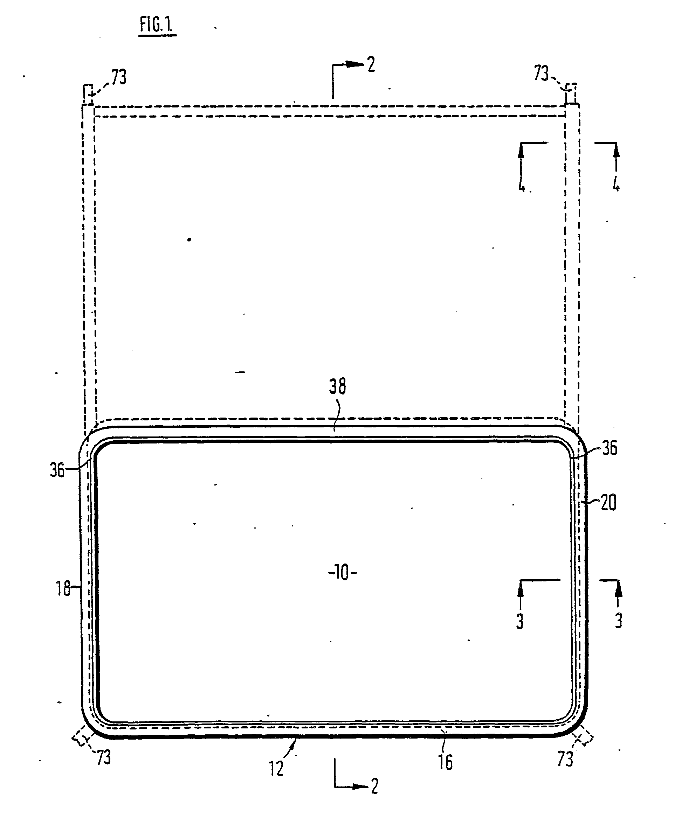

The cross sections of the front portions of the side elements 18 and 20, which bound the side edges of the opening in the vehicle roof 14, are identical with that of the central element 16. However, the side limbs 18 and 20 project rearwardly under the vehicle roof 14 and, at these projecting ends, the stem of the T-shape is cut level with the bottom of the web 32, i.e. just below the vehicle roof 14, the cut away portion starting at points 36 (Figure 1).

The rear edge of the opening in the vehicle roof 14 is bounded by a member 38 formed from extruded aluminium, having a cross section above the level of the vehicle roof identical with that of the part of the extrusion forming the elements 18 and 20 which is cut away, i.e. the web 32 and above, together with a web 40 which engages with the underside of the vehicle roof 14.

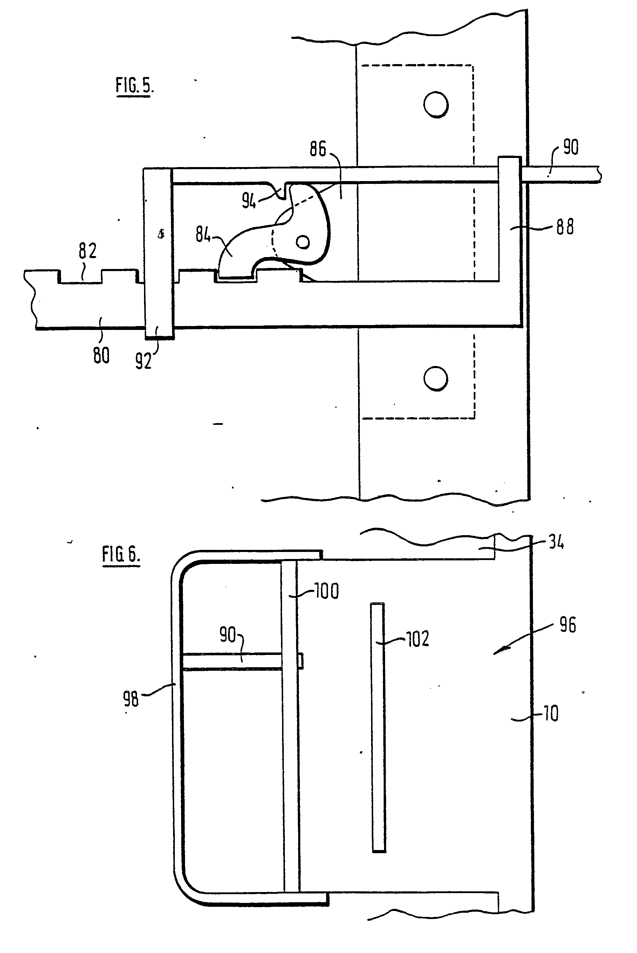

As can be seen from Figures 2 and 3, the channel defined by the limb 28 and the web 32 is lined with a seal member 42 having an additional web, which engages between the web 32 and the cross bar 22 of the T-shape, and with a lip 44 which engages with the upper surface of the glass panel 10. As can be seen from Figure 2, the rear frame member 36 carries a seal 46 similar to the upper part of the seal member 42 while, as can be seen from Figure 4, the parts of the limbs 18 and 20 projecting behind the points 36 are provided with seal members 48 similar to the lower part of the seal member 42. The seal members 42, 46 and 48 are formed of rubber or similar material, the parts thereof which embrace the edge of the glass panel 10 being felt-faced.

The limb 30 of the drain channel carries a horizontal web 50 which is received in a groove in a second seal member 52 which has a channel 54, for supporting the sun blind 34, and a lip 58 which engages with the lower surface of the glass panel 10. Below the web 50 are two further webs 60 and 62 defining a groove for receiving a wedge (not shown) for securing the fabric interior trim of the vehicle along the front and side edges of the opening in the roof 14.

A groove 64 is formed between the limb 30 and the webs 50, 60 and 62. As can best be seen from Figure 4, this groove 64 serves to receive the upturned edge of a drain tray 66 which is disposed under the vehicle roof 14 behind the opening therein and serves to receive any water which succeeds in passing the seal 46 and falls off the rear edge of the glass panel 10. An "O" type seal 68 is provided at the top of the groove 64. The rear edge of the drain tray 66 is sealed to the undersurface of the vehicle roof 14 by a Y-shaped double lip seal 70 (Figure 2). The front edge of the drain tray 66 is provided with a clip 71 for use in securing the edge of the interior fabric trim of the vehicle along the back of the opening. In order to permit water to escape from the drain tray 66, holes 72 are drilled through the edge thereof and the abutting part of the limb 30 of the drain channel 26, below the web 62, at each of the back corners of the drain tray. Drain tubes 73 lead from the four corners of the drain channel 26 down through the vehicle quarter pillars in a conventional manner.

An "O" type seal 78 is provided in a groove formed in the lower surface of the T-shaped position of the members 16, 18 and 20 and the corresponding part of the member 38.

Referring particularly to Figures 2, 5 and 6, a rack 80 has its rear end attached to the upturned rear edge of the drain tray 66 and extends forwardly between the spaces occupied by the glass panel 10 and the sun blind 34. As shown in Figure 5, the rack 80 has a series of notches 82 which can be engaged by a pawl 84 pivotally mounted on a bracket 86 which is secured to the panel 10 so as to project beyond the rear edge thereof. Projecting laterally from the front end of the rack 80 is a guide member 88 having a hole in which a rod 90 is slidably received. The rod 90 extends parallel to the rack 80 and has a lateral guide member 92 on its rear end with a hole in which the rack 80 is slidably received. Thus, the guide members 88 and 92 maintain the rack 80 and the rod 90 parallel with one another but permit them to slide relative to one another in the longitudinal direction. The rod 90 has an abutment 94 between the guide member 92 and the location at which it is received in the guide member 88. As can be seen in Figure 5, if the rod 90 moves to the right, that is towards the front of the roof, the pawl 84 is moved in the clockwise direction to disengage it from the rack 80. A spring (not shown) biases it anti-clockwise into the engaged position.

Referring now to Figures 2 and 6, the front edge of the sun blind 34 has a cut away portion 96 in which is mounted a U-shaped frame member 98. The front end of the rod 90 is secured to a handle 100 which is mounted between the limbs of the U-shaped member 94 so as to be slidable longitudinally through a sufficient distance to enable the pawl 84 to be moved to its disengaged position. A second handle 102 which is secured to the glass panel 10 projects through the cut away portion 96 of the sun blind 34 adjacent to and slightly in front of the handle 100.

The drawings show the roof assembly with the glass panel 10 and the sun blind 34 both in their closed positions. When the sun blind 34 is to be opened but the glass panel 10 left closed, the handle 100 is pushed backwards carrying the sun blind 34 with it. This moves the abutment 94 away from the pawl 84 so that, when the sun blind is closed again, by pulling forwards on the handle 100, the resulting forward movement of the rod 90 relative to the sun blind 34 has no effect on the pawl 84 which remains engaged with the rack 80.

If both the sun blind and the glass panel are to be opened, both handles 100 and 102 are grasped with the same hand, thus pulling the handle 100 forwards relative to the glass panel 10 and the sun blind 34, thereby moving the rod 90 forwards relative to the bracket 86 so that the pawl 84 mounted on the latter is moved to its disengaged position. Next both handles are pulled backwards so as to slide both panels simultaneously. Since, during this movement, the handles 100 and 102 are held together, the pawl 84 is retained in its disengaged position but, as soon as the handles are released, the pawl 84 is returned to its engaged position by its biasing spring which also pulls the handle 100 back from the handle 102. A small movement of the handle 102 is sufficient to move the pawl 84 into alignment with one of the adjacent notches 82. When the glass panel 10 is to be moved back to its closed position, both handles 100 and 102 are once again squeezed together, disengaging the pawl 84. Both handles 100 and 102 are then slid forwards simultaneously.

If the sun blind 34 is already in its open position when it is desired to open the glass panel 10, it is necessary to close it so as to enable the two handles 100 and 102 to be squeezed together to disengage the pawl 84. It is, of course, impossible for the sun blind to be closed when the glass panel is open but such a configuration would be undesirable because the sun blind is not weatherproof and is not designed to stand the buffeting which results from airflow over the car as it travels at high speed.

## Claims

1. A latch for a vehicle sliding roof assembly, having an outer sliding panel (10) and a separately movable inner sliding panel (34) each of which has a leading edge and a trailing edge and is slidable between a closed position in which it closes an opening in a vehicle roof (14) and an open position in which such opening is exposed, characterised in that the latch comprises a rack (80) having a series of latching formations (82) spaced therealong and positioned to extend between the inner and outer panels (10, 34) in the direction of sliding movement thereof, a latching member (84) mounted at a trailing edge of the outer panel (10) and biased into a position in which it engages with the rack (80), and handle means (100, 102) at the leading edges of the panels, accessible from the side of the inner panel (34) remote from the outer panel (10) and operable in a first position to effect disengagement of the latching member (84) from the rack (80) and simultaneous sliding movement of both panels (19, 34) and operable in a second position to cause sliding movement of the inner panel (34) while leaving the latching member (84) engaged with the rack (80).

2. A latch according to claim 1, characterised in that the handle means comprises a first handle (102) rigidly mounted on the outer panel (10) and a second handle (100) mounted on the inner panel (34) for limited movement relative thereto in the direction of sliding movement of the panels (10, 34), movement of the second handle (100) towards the first handle (102) causing disengagement of the latch member (84) and the two handles (100, 102) being disposed in proximity to one another when the two panels (10, 34) are in mutual alignment, so that both handles (100, 102) can be grasped with one hand to cause disengagement of the latching member (84).

3. A latch according to claim 1 or 2, characterised in that the handle means (100, 102) is coupled to the latching member (84) by a rod (90) having a projection (94) arranged to be brought into abutment with the latching member (84) to cause disengagement thereof.

4. A latch according to claim 3, wherein the rod (90) has a slide guide (92) mounted on its trailing end for sliding engagement with the rack (80) which is itself provided with a slide guide (88) on its leading end for sliding engagement with the rod (90).

5. A latch according to any preceding claim, wherein the latching member comprises a pawl (84) pivotally mounted on the trailing edge of the outer panel (10).

## Patentansprüche

1. Verriegelungsvorrichtung für eine Fahrzeugschiebedach-Baugruppe, umfassend eine äußere Schiebeplatte (10) und eine unabhängig bewegbare innere Schiebeplatte (34), die jeweils eine Vorder- und Hinterkante aufweisen und zwischen einer geschlossenen Position, in welcher sie eine Öffnung in einem Fahrzeugdach (14) verschließen und einer geöffneten Position verschiebbar sind, in der diese Öffnung freigegeben wird, dadurch gekennzeichnet, daß die Verriegelungsvorrichtung eine Leiste (80) umfasst, die eine Reihe von darauf angeordneten, voneinander beabstandeten Verriegelungsanordnungen (82) aufweist und die derart angeordnet ist, daß sie sich zwischen der inneren und der äußeren Schiebeplatte (10, 34) in deren Verschiebungsrichtung erstreckt, daß ein Verriegelungsglied (84) am Vorderende der äußeren Schiebeplatte (10) montiert und in eine Position vorgespannt ist, in der es mit der Leiste (80) in Eingriff kommt, und daß eine Handgriffanordnung (100, 102) an den Vorderkanten der Platten angeordnet ist, die von der Seite der inneren Platte (34) zugänglich ist, welche distal der äußeren Schiebeplatte (10) liegt und die in eine erste Position bringbar ist, um ein Außereingriffkommen des Verriegelungsgliedes (84) mit der Leiste (80) und gleichzeitig eine Gleitbewegung der beiden Platten (19, 34) zu bewirken und die in eine zweite Position bringbar ist, um eine Gleitbewegung der inneren Platte (34) zu bewirken und hierbei das Verriegelungsglied (84) in Eingriff mit der Leiste (80) zu belassen.

2. Verriegelungsvorrichtung nach Anspruch 1, dadurch gekennzeichnet, daß die Handgriffanordnung einen ersten Handgriff (102) umfasst, der starr an der äußeren Platte (10) befestigt ist, sowie einen zweiten Handgriff (100), der an der inneren Platte (34) mit einer begrenzten Relativbeweglichkeit zu dieser in Richtung der Gleitbewegung der Platten (10, 34) montiert ist, wobei die Bewegung des zweiten Handgriffes (100) in Richtung auf den ersten Handgriff (102) ein Außereingriffkommen des Verriegelungsgliedes (84) bewirkt und wobei die beiden Handgriffe (100, 102) nah zueinander angeordnet sind, wenn die zwei Platten (10, 34) in wechselseitiger Überdeckung angeordnet sind, so daß beide Handgriffe (100, 102) mit einer Hand gegriffen werden können, um ein Außereingriffkommen des Verriegelungsgliedes (84) zu bewirken.

3. Verriegelungsvorrichtung nach Anspruch 1 oder 2, dadurch gekennzeichnet, daß die Handgriff-Anordnung (100, 102) an das Verriegelungsglied (84) über einen Stab (90) gekoppelt ist, der einen Vorsprung (94) aufweist, welcher in geeigneter Weise angeordnet ist, um in Anschlag mit dem Verriegelungsglied (84) zu gelangen und dessen Außereingriffkommen zu bewirken.

4. Verriegelungsvorrichtung nach Anspruch 3, worin der Stab (90) eine Gleitführung (92) aufweist, die an seinem Vorderende zum Gleiteingriff mit der Leiste (80) montiert ist, die wiederum selbst mit einer Gleitführung (88) an ihrem Vorderende versehen ist, zum Gleiteingriff mit dem Stab (90).

5. Verriegelungsvorrichtung nach einem der vorhergehenden Ansprüche, worin das Verriegelungsglied eine Klaue (84) umfasst, die schwenkbar an der Vorderkante der äußeren Platte (10) montiert ist.

## Revendications

1. Un dispositif de verrouillage pour un ensemble de toit coulissant de véhicule comportant un panneau coulissant extérieur (10) et un panneau coulissant intérieur mobile séparément (34), chaque panneau présente un bord menant et un bord mené et est mobile entre une position fermée dans laquelle il ferme une ouverture ménagée dans un toit (14) de véhicule et une position ouverte dans laquelle cette ouverture est dégagée, caractérisé en ce que le dispositif de verrouillage comprend une crémaillère (80) le long de laquelle sont espacées des séries de formations de verrouillage (82) et qui sont disposées pour s'étendre entre les panneaux intérieur et extérieur (10, 34) dans le sens du mouvement de coulissement de ceux-ci, un élément de verrouillage (84) monté sur le bord mené du panneau extérieur (10) et poussé dans une position dans laquelle il vient en prise avec le crémaillère (80), et des moyens à poignées (100, 102) sur les bords menants des panneaux, accessibles à partir du côté du panneau intérieur (34) éloignés du panneau extérieur (10) et pouvant être actionnés dans une première position pour assurer le dégagement de l'élément de verrouillage (84) de la crémaillère (80) et le déplacement coulissant simultané des deux panneaux (19, 34), et dans une seconde position pour assurer le déplacement coulissant du panneau intérieur (34) en laissant l'élément de verrouillage (84) en prise avec la crémaillère (80).

2. Un dispositif de verrouillage selon la revendication 1, caractérisé en ce que les moyens à poignées comprennent une première poignée (102) montée rigidement sur la panneau extérieur (10) et une seconde poignée (100) monté sur le panneau intérieur (34) pour leur déplacement mutuel limité dans le sens du déplacement de coulissement de panneaux (10, 34) le déplacement de la seconde poignée (100) vers la première poignée (102) assurant le dégagement de l'élément de verrouillage (84) et les deux poignées (100, 102) étant disposées à proximité l'une de l'autre lorsque les deux panneaux (10, 34) sont mutuellement alignés, de telle sorte que les deux poignées (100, 102) puissent être agrippées avec une main pour assurer le dégagement de l'élément de verrouillage (84).

3. Un dispositif de verrouillage selon l'une quelconque des revendications 1 et 2, caractérisé en ce que les moyens à poignées (100, 102) sont couplés à l'élément de verrouillage (84) par une tige (90) ayant un prolongement (94) destiné à venir buter contre l'élément de verrouillage (84) pour assurer le dégagement de celui-ci.

4. Un dispositif de verrouillage selon la revendication 3, caractérisé en ce que la tige (90) présente une glissière (92) montée sur son extrémité menée et destinée à s'engager à coulissement avec la crémaillère (80) qui est elle-même munie d'une glissière (88) sur son extrémité menante pour s'engager à coulissement avec la tige (90).

5. Un dispositif de verrouillage selon l'une quelconque des revendications précédentes, caractérisé en ce que l'élément de verrouillage comprend un cliquet (84) monté à pivotement sur le bord mené du panneau extérieur (10).

FIG.1

FIG. 2

FIG. 3

FIG. 4

FIG.5.

FIG 6.